(19) Europäisches Patentamt / European Patent Office / Office européen des brevets

(11) **EP 1 879 127 A1**

(12) **EUROPEAN PATENT APPLICATION**

(43) Date of publication:
**16.01.2008 Bulletin 2008/03**

(51) Int Cl.:
***G06F 21/20*** (2006.01)

(21) Application number: **06117117.9**

(22) Date of filing: **13.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Cipherstone Technologies AB**
**414 74 Göteborg (SE)**

(72) Inventor: **Jonsson, Kenneth**
**c/o Karl-Evert Jonsson**
**46155, Trollhättan (SE)**

(74) Representative: **Lind, Urban Arvid Oskar**
**AWAPATENT AB**
**P.O. Box 11394**
**404 28 Göteborg (SE)**

(54) **User authentication method and system and password management system**

(57) A user authentication method comprising the steps of generating (101) a perceptual password including a password object, the password object being synthesized by means of a controlled deviation, from a reference password object (602), within an object space (601) defined by appearance parameters previously acquired from a training set (500) of objects, assigning (102) the perceptual password to a user, and receiving (103) a user identity claim comprising a user-provided perceptual password.

The method further comprises the steps of comparing (104) the user-provided perceptual password with the perceptual password assigned to the claimed user, and, based on the result of this comparison, accepting or rejecting (105) the user identity claim.

$$a_1 = a_0 + Bd$$

**Fig. 6**

EP 1 879 127 A1

**Description**

Technical Field of the Invention

The present invention relates to a perceptual password-based user authentication method.

The invention further relates to a perceptual password management system and a user authentication system comprising such a password management system.

Additionally, the invention relates to a method for improving security in a user authentication system based on perceptual passwords.

Technical Background

User authentication is a critical component of any security system for physical or logical access. In authentication, identity claims can be verified based on user knowledge (e.g. alphanumeric passwords or Personal Identification Numbers), items of possession (e.g. physical keys or smart cards) or user characteristics (i.e. biometrics). Alphanumeric passwords and Personal Identification Numbers (PINs) are straightforward to use and can be efficiently entered using e.g. conventional computer keyboards or numeric keypads. However, research in information security indicates that alphanumeric passwords are not well adapted to the way humans process information. In general, users find passwords difficult to remember and a solution many users adopt is to reduce the complexity and number of passwords across applications, which reduces the security obtained through the passwords.

Security tokens such as physical keys or smart cards offer an alternative or complement to alphanumeric passwords and PINs for user authentication. Physical keys and smart cards are frequently used in physical access applications and the infrastructure is well established. Smart card technologies have reached a high level of maturity and can offer distinct advantages in some applications. However, similarly to traditional knowledge-based methods, physical items for user authentication have significant drawbacks. For example, authentication tokens are frequently lost, shared between users, duplicated or stolen.

An interesting alternative to knowledge and token-based technologies is biometric user authentication based on sampling of physiological or behavioral characteristics. Recent technical innovations and a maturing market place indicate a promising future for this form of user authentication. However, biometric technologies may also introduce new issues in user authentication relating to e.g. portability, usability and robustness. Example issues with current technologies include failures in verifying authorized users, failures in rejecting unauthorized users, and failures in detecting synthetic or fake biometric samples. Also, some of these technologies may depend on specialized hardware increasing the overall cost of the physical or logical access system.

A relatively new and less explored user authentication technology is perceptual or graphical passwords, first introduced in 1996 by Greg Blonder and colleagues at Lucent Technologies. Perceptual passwords (PPWS) are based on the observation that humans find it easier to recall complex patterns when expressed as pictures as opposed to sequences of characters or digits. In general, PPW technologies may be used in any physical or logical access application integrating a graphical display. In particular, PPW technologies offer distinct advantages in mobile applications where the devices may not include a complete keyboard and data entry is achieved using a limited set of keys, a touch screen or a stylus.

In their paper "Déjà vu: A user study using images for authentication", Proceedings of 9th USENIX Security Symposium, 2000, Dhamija and Perrig disclose a PPW system, in which a trusted server stores a dataset of seed values from which synthetic images can be generated. The seeds have been manually processed to make sure that the corresponding abstract images meet regularity requirements and are visually distinguishable. In the enrolment phase, the user constructs an image portfolio by selecting a number of images from a larger set presented by the server. In verification, the server creates a challenge set of portfolio and decoy images and the user is successfully verified if all of the portfolio images are identified.

A problem with the above approach is that the generated images will belong to different object classes and may include unique and/or atypical characteristics, making the PPW-system vulnerable to so-called shoulder surfing security attacks. To address this problem, time-consuming manual processing is required to remove unfavorable portfolio images. Also, images need to be manually labeled with respect to gross appearance to avoid display of images with dissimilar but typical characteristics.

In the US patent application US 02/60955, a PPW-system using synthetic faces as password objects is disclosed. To reduce storage space requirements while maintaining a large password space, a face image is split into regions and the system keeps an image archive for each of the facial regions. A synthetic face is then generated by randomly selecting one image from each of the archives and fusing them together to form a composite image. The characteristics of skin and hair are then added on top of these surface formations.

A drawback of this PPW-system is that fusing of randomly selected image parts may result in composite images that differ significantly from the other displayed images. This reduces the security of the system, since images with dissimilar characteristics are more easily identified in a shoulder-surfing attack. Again, to address this problem, manual processing is required to remove unfavorable image parts, to create a list of valid combinations and to label the corresponding image compositions with respect to gross appearance.

There is thus a need for an improved method and system for perceptual password-based user authentication, which at least partly alleviates these and other drawbacks of the prior art.

A growing problem in user authentication is the unauthorized recording or logging of keystrokes, mouse-clicks and screen dumps performed by malicious software such as spyware. The recorded information may be relayed to a third party and then used to reproduce a verification session.

There is thus a need for an improved method and system for perceptual password-based user authentication, which at least partly alleviates these and other drawbacks of the prior art.

Objects of the Invention

In view of the above-mentioned and other drawbacks of the prior art, a general object of the present invention is to provide an improved perceptual password-based user authentication method and system.

A further object of the present invention is to improve security in user authentication systems based on perceptual passwords.

Summary of the Invention

According to a first aspect of the invention, these and other objects are achieved through a user authentication method comprising the steps of generating a perceptual password including a password object, the password object being synthesized by means of a controlled deviation from a reference password object within an object space defined by appearance parameters previously acquired from a training set of objects, assigning the perceptual password to a user, receiving a user identity claim comprising a user-provided perceptual password, comparing the user-provided perceptual password with the perceptual password assigned to the claimed user and based on the result of the comparison, accepting or rejecting the user identity claim.

A "perceptual password" should here be understood as a password comprising more information than simply textual information. The perceptual password could, for example, include still or moving images which may be in two (2D) or three (3D) dimensions and which may be abstract or realistic, sound, various symbols, or a combination thereof. Of course, a perceptual password may also include textual information, and, for example, distorted text is here considered to comprise more information than just the textual information. Furthermore, images included in perceptual passwords may be presented in grayscale or color.

Password objects comprised in perceptual passwords may be represented using both absolute and relative representations. Absolute representations include, for example, the image of a password object and the representation of a password object in terms of its appearance parameters. However, a password object can also be represented as a set of deviation parameters defining the object appearance in relation to a reference password object. A "password object" should here be understood as the appearance parameter representation of the object and the "object space" as the space of all possible password objects. When presenting or displaying a password object to a user, the appearance parameters are combined to obtain the corresponding composite signal such as a visual image.

According to the method of the present invention, a perceptual password may be automatically generated or user-generated. Furthermore, the thus generated perceptual password(s) may be automatically assigned to a user or assigned following selection of the user among several perceptual passwords presented to the user.

Moreover, the user may initiate or control the generation of the perceptual password(s), or, more specifically, the user may synthesize a set of password objects by manually adjusting user interface controls to modify the appearance parameters of the reference password object.

Especially for applications with lower security requirements, it may be favorable to import objects such as images into the user authentication system. These images would then be automatically processed and converted into the internal appearance parameter representation.

The steps comprised in the user authentication method according to the present invention may be performed at the same or different physical locations. In particular, the steps of generating one or several perceptual password(s) and assigning this/these perceptual password(s) to a user may be performed upon enrolment at a dedicated enrolment station, which may be at a secure location, which may be protected against so-called shoulder-surfing attacks, while the steps of receiving a user identity claim, comparing the user-provided perceptual password(s) with the perceptual password(s) previously assigned to the claimed user and accepting or rejecting the user identity claim may typically take place at the logical or physical access points of the user authentication system.

In contrast to the image recognition authentication systems of the prior art, the method according to the present invention does not require storage of a portfolio of full or partial images, but synthetic images may be generated as needed, which results in reduced storage space requirements, while maintaining a large password space.

Furthermore, the method according to the present invention enables real-time controlled generation of clearly distinguishable password objects, which decreases the occurrence of rejections of legitimate users.

Additionally, the method of the present invention enables generation of password objects within a single object class, such as human faces, and with controlled characteristics. This may, for example, be accomplished by selecting a suitable training set. Hereby, the resistance against so-called shoulder-surfing attacks is greatly improved compared to the prior art.

Furthermore, existing PPW systems typically require manual processing of the image portfolio to remove images with unfavorable or atypical characteristics. Examples include images with unique shape and texture variations that may be easily identifiable in a shoulder-surfing attack and therefore compromise the security of the PPW system. For face images, unique shape and texture variations include, for example, scars and tattoos.

Through the method according to the invention, it is straightforward to control the image generation to automatically avoid atypical shape and texture variations. Security may thereby be improved compared to existing user authentication schemes based on perceptual passwords.

Also, in a typical recognition PPW system, the portfolio images need to be manually labeled with respect to gross appearance to avoid the display of images with dissimilar (but typical) characteristics. In contrast, when using the method according to the present invention, it is straightforward to control the synthesis to guarantee that the displayed images automatically fulfill the similarity requirements.

Advantageously, the reference password object may be determined through statistical analysis of at least a sub-set of the previously acquired appearance parameters.

Hereby, it is ensured that the generation of the password object is started from a reference location within the object space determined by the appearance parameters of the training set.

The reference password object may be determined through statistical analysis of the entire set of previously acquired appearance parameters or of a suitable selection of these. For example, a selected sub-set of appearance parameters may correspond to a sub-group of the objects in the training set. In this way, different reference password objects may be used for different groups of users, although the same training set was utilized for the different groups.

The reference password object may advantageously be synthesized from mean values of at least a sub-set of said previously acquired appearance parameters.

In this way, the reference password object may be given a central location in the sub-space of the object space determined by the selected sub-set of the training set. Of course, any other suitable statistical measure, such as, for example, the median, may be used to derive the appearance parameters of the reference password object.

The step of generating may comprise the steps of acquiring a set of deviation parameters, and deviating, in the object space, from the reference password object in a direction and with an amount determined by the set of deviation parameters, to thereby arrive at the password object.

In this manner, the deviation of the password object from the reference password object may be determined by deviation parameters which may be internally generated by the user authentication system, or, alternatively, acquired from an external source, such as a user input device or a remotely located password management system.

This type of parametric appearance control enables precisely controlled generation of perceptual passwords with suitable characteristics.

The above step of deviating may comprise the step of adding, to a set of appearance parameters of the reference password object, a deviation set of appearance parameters obtained by weighting a set of prototype appearances obtained through statistical analysis of at least a sub-set of the appearance parameters of the training set with the acquired set of deviation parameters.

By using the acquired deviation parameters to control the weights of prototype appearances obtained through statistical analysis of at least a sub-set of the appearance parameters of the training set, parametrically controlled and virtually continuous navigation throughout the entire object space or a selected portion thereof is enabled. Hereby, a very large number of perceptual passwords may be generated using a very compact representation.

The prototype appearances may preferably be represented by eigenvectors of the covariance matrices of at least a sub-set of the acquired appearance parameters, for example shapes and textures, of the training set.

The training set may advantageously be selected such that the object space corresponds to a well-defined object class, such as human or animal faces. Furthermore, in the case of human faces, the training set may, for example, be selected such that the resulting object space corresponds to a certain sex, race and/or age group.

As discussed above, such a selection of training set will enable the generation of perceptual passwords, which are less sensitive to so-called shoulder surfing attacks.

When modeling an object class with sub-classes (e.g. faces with sub-classes race and sex) it may be beneficial to either generate separate statistical models (separate reference password objects and sets of prototype appearances) for each sub-class or to have explicit parameters in the model controlling the choice of sub-class.

For example, when faces are used as objects, mixing the data in a single model may generate intermediate objects such as mixed-race and mixed-sex faces. Studies in face perception have shown that people are less accurate when recognizing faces from other races.

Furthermore, the model should be adapted to discard (or not generate) mixed-sex faces since these would stand out and may be easier to memorize in a shoulder-surfing attack.

Finally, it is advisable to avoid displays with objects from different sub-classes since it may compromise security. For example, if the chosen object is the only male Caucasian face on the screen, this information may increase the likelihood of a shoulder-surfing attack being successful.

The password object comprised in the perceptual password may advantageously be a representation of an image of a human face. Research indicates that humans are better at recognizing faces than other types of objects. Face images are therefore ideal candidates for password objects.

According to one embodiment of the user authentication method according to the present invention, the step of receiving may comprise the steps of presenting to a user an initial perceptual password seed comprising an initial password object, and altering means for altering an appearance of the initial password object, and receiving a user-provided perceptual password comprising a user-altered initial password object.

The initial perceptual password seed may, for example, be presented to the user by means of a graphical display, which may be situated in a portable device, such as a mobile phone, or be a part of a personal computer, or be present at a physical access point.

The altering means may be provided in the form of physical or graphical user interface controls, manipulation of which lead to changes of deviation parameters, leading to a user-controlled deviation from the initial password object. For example, the shape and texture of the initial password object may be changed and the corresponding image synthesized and displayed in real-time.

Note that the altering means may not necessarily be graphical user interface widgets such as buttons and scroll bars. For example, the user interface controls may be hardware controls such as the navigational keys on a computer keyboard, the scroll wheel on a mouse, or the track wheel on a mobile device. Ideally, the absolute status of a user interface control should not be apparent from the interface since this may assist an unauthorized person in reproducing the verification session.

When comparing two password objects, the similarity may be estimated using standard pattern recognition distance measures such as the Euclidean distance, correlation, normalized correlation, or the Mahalanobis distance applied to corresponding vector elements in the parameter space, or corresponding pixel values in the synthesized images.

The initial password object may be a default password object, such as the reference password object.

Alternatively, the initial password object may be closer in the object space to the password object comprised in the perceptual password assigned to the user than the reference password object.

This may help the user in synthesizing the object and therefore speed up the verification process.

As a further alternative, the initial password object may be randomly selected.

This increases the complexity of the navigation task since it forces the user to choose different paths through the object space. However, the variation may provide an effective protection against shoulder-surfing attacks.

Advantageously, furthermore, the altering means may be adapted to enable altering of the appearance of the initial password object with a minimum step size, thereby facilitating for the user to arrive sufficiently close to the password object comprised in the perceptual password assigned to the user.

Hereby, the object space may be constrained and dependency on similarity metrics in enrolment and verification thereby avoided. With an appropriate discretization of the object space, the risk of selecting neighboring objects is low and one-way hash functions may be employed for secure storage of PPWs. Popular hash functions include SHA-2, MD5, RIPE-MD, HAVAL and SNERFU. When used together with alphanumeric conversion, the password hashing would make the user authentication method according to the present embodiment fully compatible with existing infrastructure for password management.

Of course the above-described variations may be combined. Also, in the variations detailed above, we may constrain the allowable user-alterations in parameter space to, for example, a hypersphere or hyperellipse centered on the representation of the password object in the parameter space. However, this would disallow the use of hash functions since we require prior knowledge about the user objects.

In another variation of this embodiment, the verification may be initiated with multiple randomly generated and unique password objects. The user is then asked to select one of the password objects and adjust the controls to align the appearance with any of the password objects previously assigned to the user. The initial password objects all undergo the same transformation in appearance parameters, such as shape and texture, as controlled by the user. This variation enables the design of a spyware-resistant user authentication system, especially when combined with the password tags described below in connection with the fourth and fifth embodiments of the present invention.

According to another embodiment of the user authentication method of the present invention, the step of receiving may comprise the steps of presenting to a user a plurality of perceptual password candidates, each comprising a password object, prompting the user to indicate any of the presented perceptual password candidates which correspond to perceptual passwords previously assigned to the user, and receiving the user-indicated perceptual password(s).

The perceptual password candidates may be presented to the user together or one by one on a graphical display. When displayed together, the perceptual password candidates may typically be displayed in a matrix of a pre-defined size, e.g. 3 x 3 or 4 x 3 to correspond to standard numeric keypad configurations. Also, graphical display and usability constraints may affect the choice of object matrix size.

The above steps may be repeated for a sequence of displays until the user has successfully recognized and selected a pre-defined percentage of the password objects assigned to the user, or until a pre-defined maximum number of displays has been reached.

In order to limit the effectiveness of shoulder-surfing attacks, the spatial positions of the password objects on the graphical display may advantageously be varied between verification sessions.

Furthermore, displays not including any of the perceptual passwords assigned to the user may be presented by the user authentication system. In this case, the user should ignore the display and proceed with the next one.

According to a second aspect of the invention, the above-mentioned and other objects are achieved by a perceptual password management system comprising processing circuitry adapted to indicate a perceptual password comprising a password object, the password object being synthesized by means of a controlled deviation from a reference password object within an object space defined by appearance parameters previously acquired from a training set of objects, and assign the indicated perceptual password to a user.

The perceptual password management system according to the present invention may be dedicated to a particular user authentication system, or may be a centralized system adapted to serve a plurality of user authentication systems.

In particular, the model used for generating perceptual passwords may either be stored locally on a user terminal or device, or centrally on a server connected with the user terminal through a local-area or wide-area network. If the model is stored in a central location, the generation of the perceptual password(s) may take place at the central location, or at the local terminal. The latter case, however, requires that a copy of the model used for generating the perceptual passwords is stored on the local terminal. Alternatively, the perceptual passwords may be generated at another location remote from the perceptual password management system, by the operator of the perceptual password management system or by a third party. In this case, the perceptual password management system according to the present invention indicates at least one of the perceptual passwords generated at the remote location and then assigns the indicated password(s) to a user. The assigned perceptual passwords may then be provided to the relevant user authentication system directly from the remote location where they were generated or via the perceptual password management system.

Depending on the storage scheme, either model parameters, such as deviation parameters indicative of a certain password object, or generated password objects or perceptual passwords comprising such password objects may be distributed from the central server to the user terminals. When distributing perceptual password data, compression may advantageously be applied to reduce the bandwidth requirements. The data may, furthermore, be encrypted, and error-correcting codes may be employed to increase robustness with respect to transmission noise.

By generating perceptual passwords centrally and distributing password data including image data, storage of models on local terminals or devices may be avoided and storage space requirements thereby reduced. This may be an attractive solution for low-memory mobile devices such as mobile phones, PDAs and tablet PCs. More importantly, however, is that we do not need to distribute the perceptual password generation models and therefore reduce the risk of models being compromised. In order to reduce requirements on bandwidth, standard lossless or lossy data compression techniques may be employed to reduce the size of the image data comprised in the perceptual passwords. Examples of suitable data compression techniques include the ones developed by the Joint Photographic Experts Group (JPEG), e.g. the JPEG 2000 wavelet based image compression standard.

In addition to model storage and password generation, the centralized service may provide functionality for model updating and security patch management. Also, the service can manage the security validation of models and the replacement of corrupted models.

The centralized perceptual password management system according to the present invention may, additionally, provide service for password management to allow sharing of perceptual passwords across applications or networks. The system may support issuing, reissuing, validation, invalidation, encryption, decryption and storage of PPWs. Moreover, the perceptual password management system of the invention may provide functionality for pro-active and re-active password checking, issuing of one-time passwords, salting of PPWs, enforcement of time restrictions on passwords, and single sign-on.

When using a centralized service, a scheme may be implemented for allocation of perceptual passwords to organizations and user groups. For example, groups of perceptual passwords may be allocated to specific organizations allowing e.g. enhanced password diagnostics. When a request for access is received by the system, the system can, for example, immediately reject the request if the supplied PPW does not belong to the password group assigned to the organization. Consequently, we save time by not accessing the central user database and we can therefore handle more access requests per time unit. Note that this does not prevent us from logging the requests (including the claimed username and password) for future analysis, including tracing of unauthorized access attempts.

According to one embodiment, the above-mentioned perceptual password may be indicated by means of a selection of model parameters indicative of the perceptual password.

These model parameters may include a set of deviation parameters, for enabling deviation, in the object space, from the reference password object in a direction and with an amount determined by the set of deviation parameters.

Advantageously, the processing circuitry comprised in the perceptual password management system of the present invention may further be configured to generate the perceptual password based on the model parameters.

The perceptual password management system of the present invention may further be included in a user authentication system, further comprising display means, for displaying to a user at least one perceptual password entity comprising a password object, user input means for enabling input indicative of a user identity claim comprising a user-provided perceptual password, and processing circuitry configured to compare the user-provided perceptual password with the perceptual password previously assigned to the claimed user, and accept or reject the user identity claim based on the result of the comparison.

Further features and advantages of the present second aspect of the present invention are largely analogous to those presented in connection with the first embodiment above.

According to a third aspect of the invention, the above-mentioned and other objects are achieved by a computer program module adapted to execute the steps of the method according to the present invention when run in a user authentication system according to the invention.

According to a fourth aspect of the present invention, the above-mentioned and other objects are achieved by a method, for improving security in a user authentication system based on perceptual passwords, comprising the steps of displaying at least one perceptual password entity and at least one password tag carrying information which is easily extractable by a human being, while being difficult to automatically extract using a computer program, receiving a textual input, and comparing the textual input with the information carried by the password tag.

A "perceptual password entity" includes, for example, a perceptual password candidate for selection by a user or an initial perceptual password seed for modification by a user.

The at least one password tag and the at least one perceptual password entity may be displayed simultaneously or following each other.

The present aspect of the invention is based upon the realization that security in a user authentication system based on selection or modification of perceptual passwords can be improved by decoupling the output of the user authentication system from the input to the system. This is especially the case for so-called spyware attacks involving unauthorized recording or logging of keystrokes, mouse-clicks and screen dumps performed by malicious software, since such a decoupling would render recorded input information useless for the attacker.

By including a password tag carrying information which is easily extractable by a human being, while being difficult to automatically extract using a computer program together with a perceptual password entity, textual input received by the system may be used by the system to gain information related to a perceptual password entity. Such information may include a selection of one or several perceptual password candidates or user-controlled modification of a displayed perceptual password seed. While being useful to the user authentication system, this information has no meaning to malicious software, such as spyware, since the coupling between the appearance of the displayed password tag and the textual information carried by the tag is generally only discernible to a human being.

An additional effect obtained through the present aspect of the invention is that it may be verified that the textual input is actually provided by a human being. Thereby, protection against a so-called dictionary attack against the user authentication system is provided, as well as against spyware attacks. Furthermore, additional security is obtained, since the method according to the present aspect of the invention may be used to ascertain that enrolment is performed by a human being, so that no perceptual passwords are assigned to computer generated virtual users.

It should be noted that the use of so-called Automatic Turing Tests (ATTs, also referred to as Reverse Turing Tests) in order to improve security of user authentication systems are known per se. In their paper "Securing Passwords Against Dictionary Attacks", Proceedings of the ACM Computer and Security Conference, 2002, Pinkas and Sander disclose a protocol for improving security against dictionary attacks in traditional alphanumeric password systems. According to the disclosed protocol, an ATT is, under certain conditions, used during verification to ensure that passwords are entered by human beings only.

According to the present aspect of the present invention, on the other hand, a kind of automatic Turing Test is performed primarily in order to make the connection between user-entered textual input and any information related to one or several displayed perceptual password entities opaque to malicious software, such as spyware. As a side effect, protection against dictionary attacks against the perceptual password-based user authentication system is also obtained.

Additionally, the method according to the present aspect of the invention improves security of the user authentication system by making so-called shoulder surfing attacks less likely to succeed. An observer needs to watch the keyboard, temporarily memorize the textual information being entered, map the textual information to one or several password tag(s) displayed on the screen and then memorize the perceptual password entity or entities associated with the password tag(s). Note that the information carried by the password tags and the location of the password objects and the password tags on the display may vary between verification sessions. Also, in a typical implementation the password objects and password tags may only be shown on the display for a limited period of time.

It should be noted that the perceptual password entities of the present aspect of the invention need not be generated according to previous aspects of the present invention, but may be any kind of perceptual passwords, such as facial or other images from a dataset, user selected password objects, or system generated perceptual passwords, which are generated using other schemes than the one described above.

Advantageously, the information carried by the password tag may be related to at least one of the displayed password objects.

The method according to the present aspect of the invention may further comprise the step of extracting, from the textual input, the information related to the at least one perceptual password entity.

According to one embodiment, a plurality of perceptual password entities may be displayed together with the at least one password tag, and the information carried by the at least one password tag may be indicative of a selection of at least one of the perceptual password entities.

Hereby, the user may select one or several perceptual password entities, for example during verification, without revealing to spyware which object(s) was/ were selected. This improves the security of the user authentication system. In a sequence of screen images displayed, one or several screen images may contain password tags carrying no relevant information. If all password tags lack relevant information, the screen image should be ignored by the user and the system proceeds to the next screen image.

Furthermore, the plurality of perceptual password entities may be displayed together with a plurality of password tags each carrying information which is easily extractable by a human being, while being difficult to automatically extract using a computer program, and the information carried by each of said password tags may be indicative of a selection of a corresponding one of the perceptual password entities.

Hereby, the selection among a plurality of perceptual password entities is made straightforward to the user while obtaining a high level of security in the system.

Alternatively, each of the perceptual password entities may be selectable through textual input corresponding to the information carried by more than one of said password tags.

For example, the perceptual password entities may be displayed in a matrix formation and each row and column may be selected through textual input of information comprised in a password tag indicating that particular row or column.

According to another embodiment, the method according to the present aspect of the invention may further comprise the step of permitting, given that the textual input corresponds to the information carried by the password tag, selection and/or modification of the at least first perceptual password entity.

In this manner, a perceptual password entity is effectively locked against selection and/or modification by other than a human user, thereby avoiding computerized brute force attacks against the user authentication system.

The password tag may comprise a string of distorted alphanumeric characters, the information carried by the password tag being the string of alphanumeric characters.

Alternatively, the password tag comprises at least one graphical object embedded in a background having different texture properties, the information carried by the password tag being, for example, the number of the embedded graphical objects.

According to a fifth embodiment of the present invention, the above-mentioned and other objects are achieved through a user authentication system comprising display means for displaying at least one perceptual password entity and at least one password tag carrying information which is easily extractable by a human being, while being difficult to automatically extract using a computer program, input means for receiving a textual input, and processing circuitry configured to compare the textual input with the information carried by the password tag, thereby enabling determination of whether the input was performed by a human being.

Advantageously, the processing circuitry may further be configured to extract, from the textual input, information related to the at least one perceptual password entity.

Features and advantages of the present fifth aspect of the present invention are largely analogous to those presented in connection with the fourth embodiment above.

Brief Description of the Drawings

These and other aspects of the present invention will now be described in more detail, with reference to the appended drawings showing currently preferred embodiments of the invention, wherein:

Fig 1 is a flow-chart illustrating the user authentication method according to the present invention.
Fig 2 is a flow-chart illustrating a first embodiment of the user authentication method according to the present invention.

Fig 3 is a flow-chart illustrating the method for generating a perceptual password according to the present invention.

Fig 4 is a schematic representation of a graphical object comprised in a training set.

Fig 5a is an exemplifying illustration of a training set of graphical objects.

Fig 5b is a flow-chart illustrating an example of a method for generating a statistical model useable for generating perceptual passwords according to the user authentication method of the present invention.

Fig 6 is a schematic illustration of an object space defined by the training set of fig 5a and deviation from a reference password object. Fig 7a is a flow-chart illustrating a second embodiment of the user authentication method according to the present invention.

Fig 7b schematically illustrates an exemplifying enrolment procedure according to the method of fig 7a.

Fig 7c schematically illustrates an exemplifying verification procedure according to the method of fig 7a.

Fig 8a is a flow-chart illustrating a third embodiment of the user authentication method according to the present invention.

Fig 8b schematically illustrates an exemplifying enrolment procedure according to the method of fig 8a.

Fig 8c schematically illustrates an exemplifying verification procedure according to the method of fig 8a.

Fig 9 is a block diagram schematically illustrating a first embodiment of a user authentication system according to the present invention.

Fig 10 is a block diagram schematically illustrating a second embodiment of a user authentication system according to the present invention, having a centralized perceptual password management system.

Fig 11 is a flow-chart illustrating the method according to the invention, for improving security in a user authentication system based on perceptual passwords.

Figs 12a-c schematically illustrate various embodiments of the method in fig 11.

Detailed Description of Preferred Embodiments of the Invention

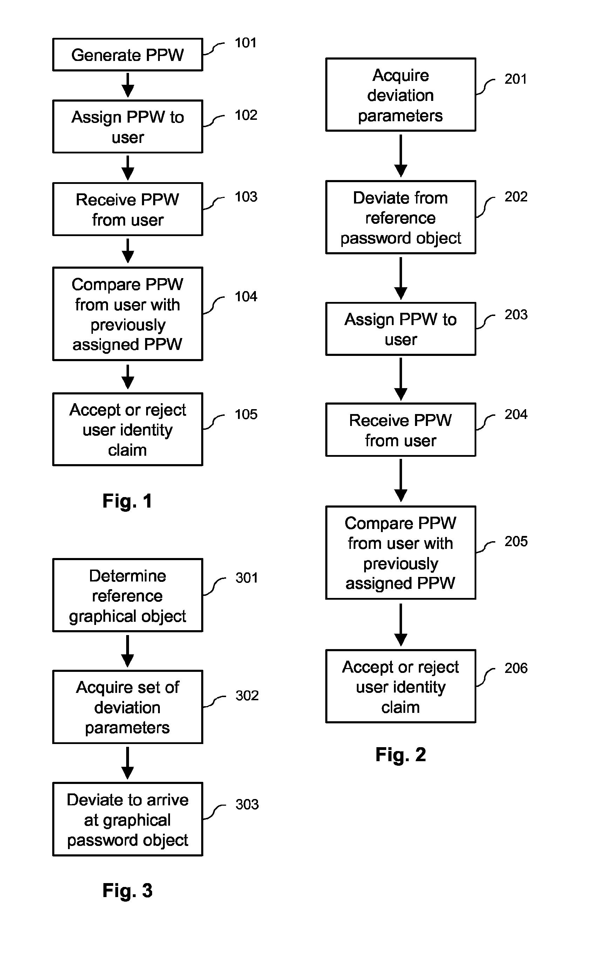

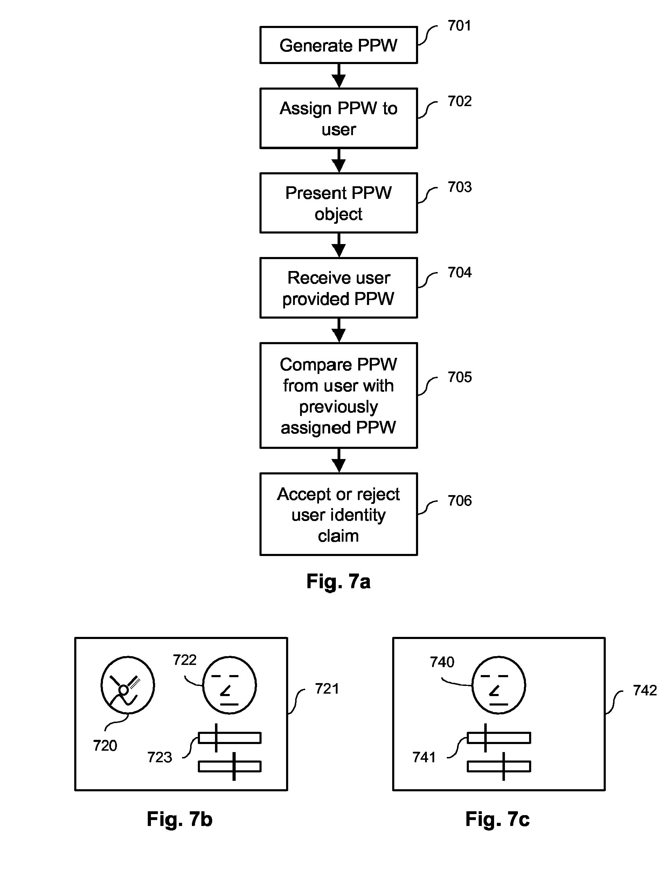

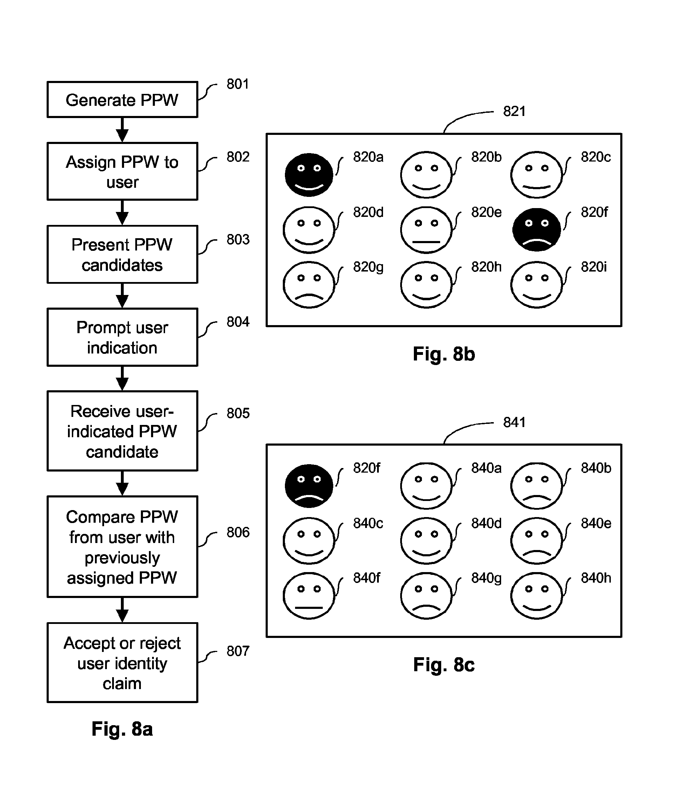

In fig 1, a flow-chart illustrating the user authentication method according to the present invention is shown. Referring to fig 1, a perceptual password comprising a password object is generated in a first step 101. More detail on the generation of the perceptual password is given below in connection with figs 2 and 3. In a subsequent step 102, the perceptual password generated in step 101 is assigned to a user. This assignment of a perceptual password (or any password) to a user is generally referred to as enrolment of the user. Following enrolment, the user is ready to use her/his assigned perceptual password in order to gain access to, for example, a logical or physical system, such as a computer network or a building, respectively. This use of a password in order to gain access to a system is generally referred to as verification. In the subsequent step 103, a verification attempt is performed and the user authentication system receives a user-provided perceptual password. This user-provided perceptual password may be presented to the system in various ways, and in order to increase security of the user authentication system, the user may be required to provide several perceptual passwords corresponding to previously assigned perceptual passwords. The reception of one or several user-provided perceptual passwords is described in more detail below in connection with figs 7a-c and 8a-c. The user-provided password(s) is/are subsequently, in step 104, compared with the password(s) previously (in step 102) assigned to the user. Finally, in step 105, the user identity claim is accepted or rejected based on the result of the comparison of step 104.

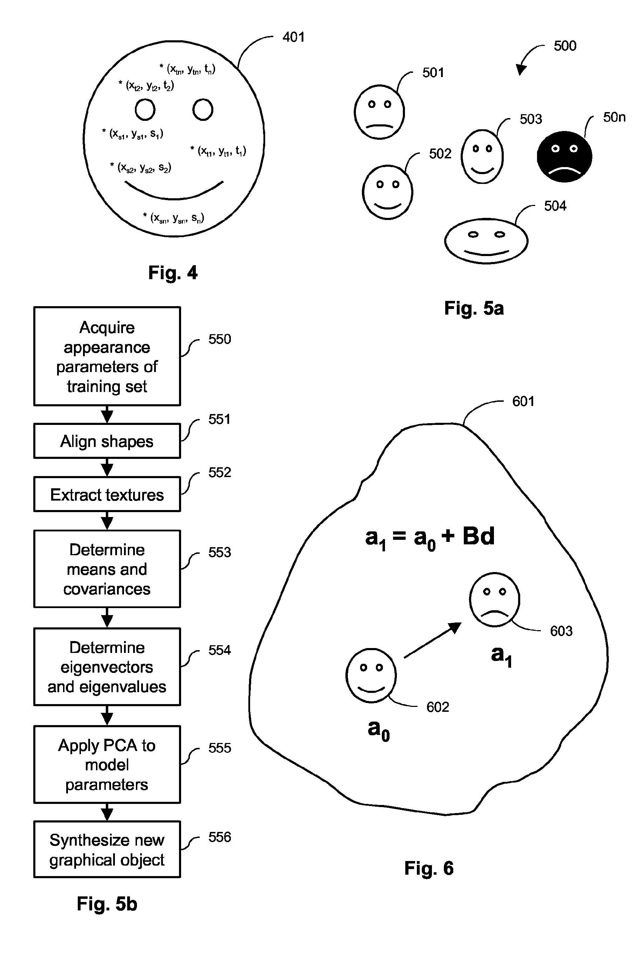

With reference to figs 2 and 6, a preferred embodiment of the user authentication according to the present invention will here be described. The step 101 of generating a perceptual password in fig 1 is here replaced by a step 201 of acquiring deviation parameters d (fig 6) followed by a step 202 of deviating in an object space 601 defined by appearance parameters obtained from a previously acquired training set of objects, from the reference password object 602 in a direction and with an amount determined by the acquired set of deviation parameters, as schematically shown by the arrow in fig 6.

In fig 3, a flow chart is shown, schematically illustrating a method for generating a perceptual password according to the present invention. In a first step 301, a reference password object is determined. In the following step 302, a set of deviation parameters is acquired. These deviation parameters may be acquired from an internal source, such as a memory or from an external source, such as from an external system or from a user via some user-input device, such as a keyboard, mouse, touchpad or touchscreen. In a final step 303, the acquired deviation parameters are used to deviate, within the object space defined by the previously acquired training set of objects, from the reference password object determined in step 301 to arrive at a password object included in the thus generated perceptual password.

In the following section, an example of acquisition of appearance parameters from objects comprised in a training set will be detailed, with reference to figs 4 and 5. The appearance parameters thus acquired define an object space, within which the controlled deviation from a reference password object is performed. An example of such a deviation is schematically shown in fig 6 and will be described in more detail below.

Referring now to fig 4, an example password object here in the form of a stylized human face 401 is shown, from which appearance parameters in the form of shape and texture values $s_1 - s_n$ and $t_1 - t_m$ at respective

locations $(X_{s1}, y_{s1})$ - $(y_{sn}, y_{sn})$ and $(X_{t1}, Y_{t1})$ - $(X_{tm}, y_{tm})$ are extracted.

When extracting the shape and texture representation of a graphical password object one may advantageously start by locating a set of landmarks or fiducial points. Typically, points are chosen that can be robustly located using automatic techniques, or that are required by relevant standards. The Moving Picture Experts Group (MPEG) is a working group of ISO/IEC in charge of the development of standards for coded representation of digital audio and video. The group has developed the MPEG-4 standard including the definition of a number of facial feature points to be used in animation. These feature points or landmarks are also used in other applications such as model-based image coding systems. When using a human face to derive the password object comprised in a perceptual password, it may be beneficial to use the animation standard for facial feature points. For example, when implementing a user authentication system based on perceptual passwords in a mobile phone or PDA, the MPEG-4 compliant statistical model may be reused in other mobile applications such as model-based image coding, facial animation or biometric user authentication, and precious storage space thereby saved.

In fig 5a, a training set 500 of graphical objects 501-50n is schematically shown. By acquiring appearance parameters, as explained in connection with fig 4, from each graphical object 501-50n in the training set 500, a model for synthesizing the password objects included in the perceptual passwords can be determined.

According to a preferred embodiment, the variation in shape and texture is learned from the graphical objects 501-50n comprised in the training set 500. Hereby, a parametric deformable model may be generated, which meets requirements on generality, specificity and compactness. A model meets our requirement on generality if it captures all the variation in shape and texture within a given object class and therefore allows the synthesis of all valid objects. Furthermore, the requirement on specificity is met if we cannot synthesize invalid objects using the parametric model. Finally, we aim to produce a model capturing the variation in shape and texture in as few parameters as possible to minimize storage space and bandwidth requirements.

Below the mathematical procedure for generating an example of such a model is detailed.

According to the present example and with reference to fig 5b, a model is generated by, in a first step 550, capturing the variations in shape and texture in a given object class as represented by a training set. An object shape can be represented by a set of n points in any dimension. Typically the points are in two or three dimensions. We obtain these points or landmarks from the training set using manual, semi-automatic or fully automatic localization. In d dimensions, we represent the n landmark points as a dn element vector formed by concatenation of the elements of the individual point position vectors. For example, in 2D we get a 2n element vector:

$$\mathbf{s} = \left(x_1, y_1, \ldots, x_{n,} y_n\right)^T$$

Note that the representation of a shape may be generalized to include time. For example, a 3D shape may consist of 3D points or 2D points sampled over time (i.e. an image sequence). Similarly, a 2D shape can consist of 2D points or 1D points sampled over time.

In a subsequent step 551 the shapes are aligned in order to remove the effect of any geometrical similarity transformations (i.e. translations, scalings and rotations). This may, for example, be achieved using Generalized Procrustes Analysis (GPA). The shape coordinates may then be projected into the tangent plane of the shape manifold, at the pole given by the mean shape.

In the following step 552, the texture representation is extracted by warping the image patches into correspondence using, for example, a piecewise affine warp or thin plate splines and then sampling the values from the shape-free patches. Typically, we would choose the Procrustes mean shape as the reference shape to which the image patches are warped. However, other reference shapes, such as the corresponding median shape, are equally applicable.

To achieve compactness, the variability in object shape and texture may advantageously be modeled using Principal Component Analysis (PCA). According to PCA, the sample shape and texture means, $\bar{\mathbf{s}}$ and $\bar{\mathbf{t}}$, and the corresponding covariances, $\Sigma_s$ and $\Sigma_t$ are determined in step 553. In the following step 554, the eigenvectors and eigenvalues of $\Sigma_s$ and $\Sigma_t$ are determined, and the matrices $\Phi_s$ and $\Phi_t$ formed of column eigenvectors. By selecting model parameters $\mathbf{b}_s$ and $\mathbf{b}_t$, a new object shape $\mathbf{s}$ and texture $\mathbf{t}$ may be synthesized using the following linear operations:

$$\mathbf{s} = \bar{\mathbf{s}} + \mathbf{\Phi}_s \mathbf{b}_s$$
$$\mathbf{t} = \bar{\mathbf{t}} + \mathbf{\Phi}_t \mathbf{b}_t$$

We obtain a combined shape and texture representation as follows:

$$\mathbf{b} = \begin{bmatrix} \mathbf{W}_s \mathbf{b}_s \\ \mathbf{b}_t \end{bmatrix} = \begin{bmatrix} \mathbf{W}_s \mathbf{\Phi}_s^T (\mathbf{s} - \bar{\mathbf{s}}) \\ \mathbf{\Phi}_t^T (\mathbf{t} - \bar{\mathbf{t}}) \end{bmatrix},$$

where $\mathbf{W}_s$ is a diagonal weight matrix allowing for the difference in units between the shape and texture parameters. A straightforward weighting scheme is to employ the square root of the ratio between the texture and shape eigenvalue sums.

Since there may be correlations between the shape and texture variations, we apply, in a subsequent step 555, a further PCA to the shape and texture model parameters:

$$\mathbf{b} = \mathbf{\Phi}_c \mathbf{c} = \begin{bmatrix} \mathbf{\Phi}_{c,s} \\ \mathbf{\Phi}_{c,t} \end{bmatrix} \mathbf{c}$$

Hereby, the combined appearance model parameters **c** are obtained. The columns of $\Phi_c$ are the eigenvectors of the sample covariance matrix estimated from the training set of shape and texture parameters **b**. Given the combined appearance model, we can, in step 556, synthesize new object instances using the following operations:

$$\mathbf{s} = \overline{\mathbf{s}} + \mathbf{\Phi}_s \mathbf{W}_s^{-1} \mathbf{\Phi}_{c,s} \mathbf{c}$$

$$\mathbf{t} = \overline{\mathbf{t}} + \mathbf{\Phi}_t \mathbf{\Phi}_{c,t} \mathbf{c}$$

The object instance (s, t) is synthesized into an image by warping the pixel intensities of t into the geometry of the shape s. Note that the above expressions can be replaced by a single linear operation by concatenating corresponding vectors and matrices, as illustrated in fig 6 where e.g. $\mathbf{a}_0 = \begin{bmatrix} \overline{\mathbf{s}} \\ \overline{\mathbf{t}} \end{bmatrix}$ and $\mathbf{a}_1 = \begin{bmatrix} \mathbf{s} \\ \mathbf{t} \end{bmatrix}$. To regu-

larize the model and to improve compactness, the eigenvector matrices $\Phi_s$, $\Phi_t$ and $\Phi_c$ are truncated. Typically, we would determine the number of eigenvectors to retain from the proportion of the variance we need to represent. Alternatively, we keep the minimum number of eigenvectors needed for the residual terms to be considered noise.

To meet the requirement on specificity, we wish to estimate the distribution of the model parameters $p(\mathbf{c})$ from the training set. We define a set of parameters as plausible if $p(\mathbf{c}) \gtrsim p_t$ where $p_t$ is some suitable threshold on the probability density function. We approximate a kernel density estimate of the distribution $p(\mathbf{c})$ as a mixture of m gaussians:

$$p_{mix}(\mathbf{c}) = \sum_{j=1}^{m} w_j G(\mathbf{c} : \mathbf{\mu}_j, \Sigma_j)$$

where $w_j$, $\mu_j$ and $\Sigma_j$ are the weight, mean and covariance for component $j$. For example, The Expectation Maximization (EM) algorithm may be used to fit such a mixture to a data set.

The method detailed above is based on the assumption that object variations can be accurately captured using a linear model of shape and texture. However, the linear model may not adequately represent more complex variations in shape such as those generated when there is a change in viewing position of a 3D object. Possible non-linear extensions of the above framework include the use of polynomial modes, multi-layer perceptrons to perform non-linear PCA, kernel PCA, and polar coordinates for rotating subparts of the model.

The method for generating a model for synthesis of password objects detailed above should by no means be regarded as limiting the scope of the present invention. Several other methods may be used to generate such a model. For example, variations of numerous methods used for medical imaging and biometrics may be utilized. An example of such a method is the so-called Morphable Models (MMs) method. This approach was first proposed for 3D color images as acquired using a 3D range scanner.

In figs 7a-c, a second embodiment of the authentication method according to the present invention is shown, where user authentication is performed by means of so-called recall authentication.

Referring now to fig 7a, a perceptual password is generated in a first step 701 and assigned to a user in a second step 702 as previously described in general terms in connection with fig 1. These steps describe the enrolment procedure of the recall authentication scheme, which will now be described in greater detail with reference to fig 7b. According to the recall authentication scheme the user, during the enrolment procedure, learns to recognize and synthesize one or several password objects comprised in corresponding perceptual passwords. These password objects may be automatically generated by the system or created through user-provided input. The password object(s) 720 may, for example, be synthesized using the statistical model detailed above and may, for example, be presented one by one on a graphical display 721 next to a default object 722, which may, for example, be the reference password object. Also displayed are a number of user interface controls 723 to change the appearance of the default object 722. The user is asked to adjust the controls 723 to change the appearance of the default password object 722 to be as similar as possible to the password object 720. When the similarity is above a threshold, the procedure may be terminated, or, for increased system security, repeated with further password objects. The training phase is completed when the user has processed all of the objects displayed for a certain level of system security. To make sure the training phase was successful, the system may ask the user to perform a number of dummy verifications. If more than a pre-defined maximum percentage of the verifications fail, the system may assign new objects to the user and the training phase is re-iterated.

Referring once again to fig 7a, a perceptual password seed, comprising an initial password object, is presented to the user in step 703. In the subsequent step 704, the user authentication receives a user-provided perceptual password, which is compared with the perceptual password previously assigned to the user in step 705. Based on this comparison, the system accepts or rejects the user identity claim in step 706. These steps describe the verification procedure of the recall authentication scheme, which will now be described in greater detail with reference to fig 7c.

In verification, the user is shown an initial password object 740 and user interface controls 741 on a graphical display 742. To successfully verify, the user needs to modify the appearance of the initial password object 740 to get sufficiently close to any of the password objects 720 comprised in any of the perceptual passwords previously assigned to the user. The appearance of the initial password object 740 may be changed as in the enrolment process by adjusting the user interface controls 741. For high security applications, the user may be asked to perform a series of verifications in order to be authenticated. When the similarity with respect to any of the previously assigned password objects is above a threshold, the initial password object then replaces the synthesized object and the controls are reset. The user is then asked to synthesize another of the previously assigned password objects. When the user has successfully synthesized a pre-defined minimum percentage of the password objects assigned to the user, the authentication procedure is complete.

In figs 8a-c, a third embodiment of the authentication method according to the present invention is shown, where user authentication is performed by means of so-called recognition authentication.

Referring now to fig 8a, a perceptual password is generated in a first step 801 and assigned to a user in a second step 802 as previously described in general terms in connection with fig 1. These steps describe the enrolment process of the recognition authentication scheme, which will now be described in greater detail with reference to fig 8b. According to the recognition authentication scheme the user, during the enrolment procedure, learns to recognize one or several password objects comprised in corresponding perceptual passwords. These password objects may be automatically generated by the system or created through user-provided input. The password object(s) 820a-i may, for example, be synthesized using the statistical model detailed above and may, for example, be presented together or one by one on a graphical display 821. If relevant for the password object type, there may textual information displayed next to the object to assist in the learning process. The training phase is completed when the user has viewed all of the objects 820a-i. To make sure the training phase was successful, the system may ask the user to perform a number of dummy verifications. If more than a pre-defined maximum percentage of the verifications fail, the system may assign new password objects to the user and the training phase is re-iterated. Note that, ideally, the enrolment process should take place in a secure environment since the password objects 820a-i assigned to the user are clearly shown on the display 821 for some time and could therefore be learned or recorded by unauthorized users in a shoulder-surfing attack.

Referring once again to fig 8a, a plurality of perceptual password candidates, each comprising a password object, is presented to the user in step 803. The perceptual password candidates presented to the user may or may not include one or several of the perceptual passwords previously assigned to the user in step 802. In the subsequent step 804, the user is prompted by the system to indicate any of the presented perceptual password candidates, which correspond to perceptual passwords previously assigned to the user. The user indicated perceptual password candidate(s) is/are then received by the system in step 805 and compared with the perceptual password(s) previously assigned to the user in step 806. Based on this comparison, the system then accepts or rejects the user identity claim in step 807.

These steps describe the verification procedure of the recognition authentication scheme, which will now be described in greater detail with reference to fig 8c.

In verification, the user is shown a set of perceptual password candidates, each comprising a password object, which here includes one of the previously assigned perceptual passwords, say 820f and a number of decoy perceptual passwords 840a-h on a graphical display 841. The user is asked to select a previously assigned perceptual password comprising a password object among the perceptual password candidates displayed on the display device 841. Typically, the objects will be displayed in a matrix of a pre-defined size, e.g. 3 x 3 or 4 x 3 to correspond to standard numeric keypad configurations. Also, graphical display and usability constraints may affect the choice of object matrix size. Depending on system security requirements, the selection process may be repeated for a sequence of displays until the user has successfully recognized and selected a pre-defined percentage of the previously assigned perceptual passwords, or until a pre-defined maximum number of displays has been reached. One or several of the displays in a sequence of displays may contain only decoy perceptual passwords. The user should then proceed to the next display using user interface means, such as a specified keyboard key or an "ignore" button (not shown) displayed on the display means for ignoring the present display.

It should be noted that figs 4, 5a, 6, 7b-c, and 8b-c show highly simplified perceptual passwords including password objects. In some cases, the shape and texture characteristics have been exaggerated to clearly illustrate, for example, the natural variability in an object training set, or the reoccurrence of a particular password object in verification. In a real-world implementation, we would typically avoid the display of dissimilar password objects to limit the effectiveness of shoulder-surfing attacks. Also, we may vary the spatial positions of the perceptual password candidates on the graphical display between verification sessions.

The perceptual passwords assigned to the user in the recall and recognition authentication schemes described above may, as mentioned, be selected or generated by the user. In the enrolment procedure, the system may then, for example, present a set of password objects from which the user chooses a subset. The password objects comprised in the perceptual passwords assigned to the user may then be generated by randomly selecting appearance parameters, such as shape and/or texture, within the constraints of the statistical model. Alternatively, the user may synthesize a set of objects by starting from an initial password object and adjusting user interface controls to modify the shape and texture of the initial password object. Also, it may be possible to import object images and these images are then automatically processed and converted into the internal appearance parameter representation.

The basic form of a shoulder-surfing attack is when an unauthorized person is looking over the shoulder of a user entering his or her password. In the recall and recognition PPW systems described above, this form of attack may be addressed by enforcing time restrictions on the display of PPW objects. After a pre-defined maximum display time (typically a few seconds), the PPW objects are replaced by, for example, the initial or reference password object, randomly chosen objects or a non-object.

If compliance with existing infrastructure for password management is required, we may need to provide an alphanumeric representation of a PPW. The password management system may enforce restrictions on character sets and password length. For example, alphanumeric passwords are usually restricted to the standard printable ASCII characters and a typical maximum password length in recent desktop operating systems is 127 characters. In a typical implementation, the perceptual password is represented in the form of vectors of real numbers and a straightforward alphanumeric conversion is to map the real numbers to integers by scaling and rounding. However, the maximum password length limits the size of the scaling and the rounding may therefore result in significant information loss. Alternatively, we can use the full set of valid characters and digits resulting in a more compact password encoding. Also, it may be possible to avoid information loss by implementing lookup tables where model parameter values are mapped to alphanumeric representations. The lookup table effectively restricts the model parameter space to pre-defined passwords and may be stored together with the model.

Note that a strong alphanumeric password is typically defined as a password with at least eight characters containing upper and lower case letters, numerical digits and special characters (e.g. punctuation characters). Moreover, password policies usually require that passwords are not included in a dictionary or crackers list, and do not represent e.g. valid calendar dates or license plate numbers.

These password restrictions are straightforward to enforce in the context of statistical PPWs.

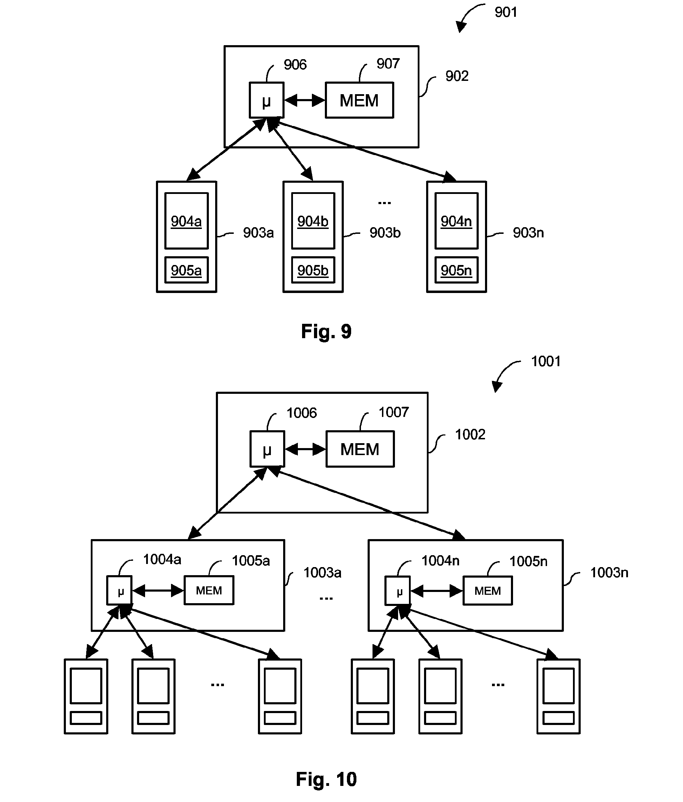

In fig 9, a first embodiment of a user authentication system according to the present invention is schematically illustrated.

Referring to fig 9, a user authentication system 901 is shown comprising a perceptual password management system 902 and a number of enrolment/verification terminals 903a-n, each having a graphical display 904a-n and user input means, here in the form of a keyboard 905a-n. The perceptual password management system 902 includes a microprocessor 906, which is adapted to generate perceptual passwords and to assign one or several of these perceptual passwords to a user, and a memory 907 for storing information indicative of the assignment. An assignment item stored in the memory 907 could, for example, include a user ID and a set of deviation parameters for enabling generation of the perceptual password assigned to the user. The assignment item may further include model parameters, which may be different for different groups of users, or the assignment item may include the perceptual password assigned to the user in the form of, for example, an image file.

Upon enrolment and/or verification, the user may communicate with the user authentication system via one or several of the enrolment/verification terminals 903a-n as described above in connection with figs 7a-c and/or 8a-c.

In fig 10, a second embodiment of a user authentication system according to the present invention is schematically illustrated.

Referring to fig 10, a user authentication system 1001 is shown comprising a centralized perceptual password management system 1002 and a number of local user authentication systems 1003a-n, each having a microprocessor 1004a-n, and a memory 1005a-n. Each of the local user authentication systems further includes a number of graphical displays and user input means, here in the form of keyboards. The centralized perceptual password management system 1002 includes a microprocessor 1006 which is adapted to select model parameters enabling generation of a perceptual password comprising a password object which is synthesized by means of a controlled deviation from a reference password object within an object space defined by appearance parameters previously acquired from a training set of objects. The microprocessor 1006 is further adapted to assign the perceptual password indicated by the selected model parameters to a particular user. The centralized perceptual password management system 1002 further comprises a memory 1007 for storing information indicative of the assignment. An assignment item stored in the memory 1007 could, for example, include a user ID and a set of deviation parameters for enabling generation of the perceptual password assigned to the user. The assignment item may further include model parameters, which may be different for different groups of users, or the assignment item may include the perceptual password assigned to the user in the form of, for example, an image file.

Depending on, for example, system security requirements, available processing power, connectivity, bandwidth limitations or storage capabilities of the local user authentication systems 1003a-n, different types of information may be transferred between the centralized password management system 1002 and the local user authentication systems 1003a-n connected thereto.

Upon enrolment and/or verification, the user may interact with one of the local user authentication systems 1003a-n as described above in connection with figs 7a-c and/or 8a-c.

In wireless applications the local user authentication system may be constituted by, for example, a mobile device such as a mobile phone, PDA or tablet PC. The mobile device may be connected with a central server, incorporating the centralized password management system 1002 through a wireless connection such as the ones provided through the second (2G) and third (3G) generation mobile networks.

The user authentication systems described above in connection with figs 9 and 10 may be included in logical or physical access systems, in which logical and physical access, respectively, is granted to a user following successful authentication. For both these types of access systems, the perceptual password functionality may advantageously be integrated in a system equipped with smart card technology. The smart card may be viewed as a processing unit with non-volatile storage capabilities, and the card interacts with a smart card reader through a contact or contact-less interface. The processing steps may be distributed between the card, the card reader and other processing units connected with the card reader (e.g. a central server). Also, the data may be distributed between memory units connected with any of these processing units. Note that the graphical display may be mounted on the smart card or the card reader. Also, note that a Subscriber Identity Module (SIM) card may be viewed as a smart card, and the card reader functionality is then implemented in the mobile device.

The person skilled in the art realizes that the present invention by no means is limited to the preferred embodiments described above. On the contrary, many modifications and variations are possible within the scope of the appended claims. For example, the effectiveness of spyware attacks may be limited by introducing variations in the object output. The variations should be designed to make automated object recognition through computer vision techniques significantly more difficult, while not affecting the human recognition performance to any greater extent. It is straightforward to design automated methods for object recognition when the transformations are limited to 2D translation, rotation and scale. However, we can increase the complexity of the recognition task by introducing variations in 3D pose and lighting. These physical parameters are straightforward to control using, for example, the Morphable Models mentioned above.

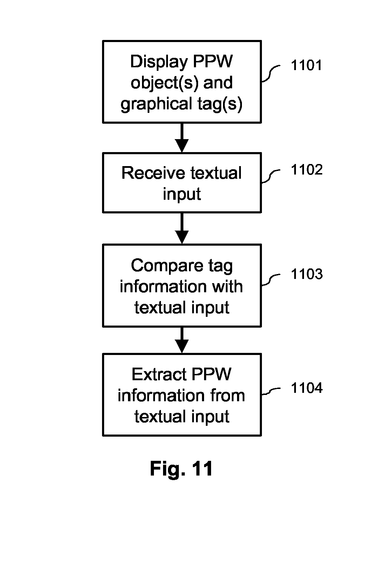

In fig 11, a flow-chart illustrating a preferred embodiment of the method according to the present invention for improving security in a user authentication system based on perceptual passwords is shown. In a first step 1101, at least one perceptual password entity and at least one password tag are displayed. The password tag carries information which is related to at least one of the displayed perceptual password entities and which is easily extractable by a human being but difficult to automatically extract using a computer program. In a subsequent step 1102, a textual input is received, which is, in the next step 1103, compared to the information carried by the password tag. In a final step 1104, information related to the at least one perceptual password entity is extracted.

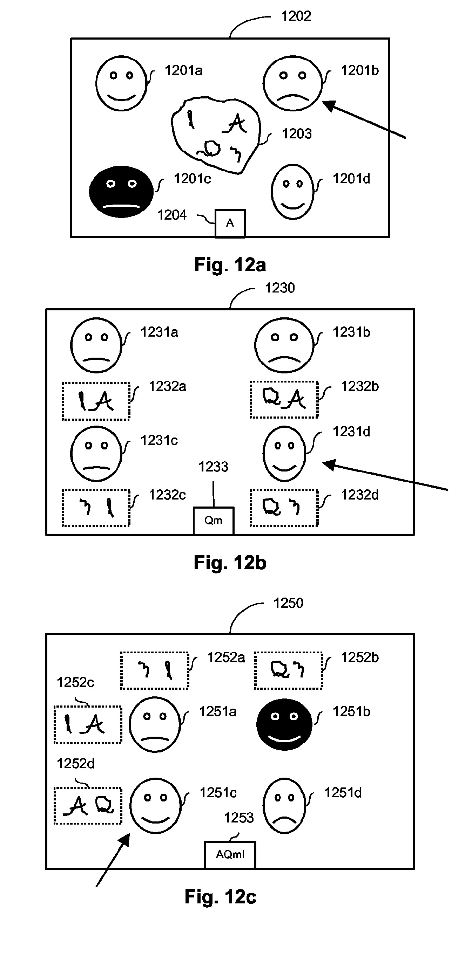

In figs 12a-c various embodiments of the above-described method are illustrated.

Referring first to fig 12a, schematically illustrating a first embodiment of the security improvement method according to the present invention, four perceptual password entities, here in the form of perceptual password candidates 1201a-d, are displayed in a verification screen image 1202 together with one password tag 1203 comprising the distorted letters **1, A, Q,** and **m.** The screen image 1202 further includes a box 1204 for textual input. According to the present embodiment, the single password tag 1203 displayed contains information enabling selection of each of the perceptual password candidates 1201a-d. By entering one or several of the characters shown in the password tag 1203, the perceptual password candidate(s) with an on-screen position corresponding to the entered letter(s) is/are selected. According to the example illustrated in fig 12a, the letter A is entered, and consequently the perceptual password candidate 1201b selected. It should be noted that the perceptual password candidates and password tags illustrated in figs 12a-c are simplified illustrations intended to clarify the present method. In real implementations, the perceptual password candidates may include, for example, still or moving images which may be in 2D or 3D and which may be realistic or abstract, and the password tags typically exhibit variations in color, shape, and texture in order to make the information carried by the password tags easily accessible to a human being while being difficult to automatically extract by means of a computer program. Also, the password tags may be displayed on a non-uniform background to further increase the complexity of the automated extraction task.

Referring now to fig 12b, schematically illustrating a second embodiment of the present method, the screen image 1230 includes four perceptual password candidates 1231a-d and four corresponding password tags 1232a-d. In the illustrated example, the perceptual password candidate 1231d is selected by the textual entry of the letters **Qm** in the box 1233.

In fig 12c, the screen image 1250 once again includes four perceptual password candidates 1251a-d and four password tags 1252a-d, one for each row and column of displayed password candidates. According to the example illustrated here, the perceptual password candidate 1251c is selected through the entry of the letters **AQml** corresponding to the row and column coordinates of the selected password candidate 1251c.

In figures 12a-c, the textual input is, for the sake of clarity, displayed in a text box. In typical applications, however, this textual input would not be shown at all or masked as is common practice for entry of conventional alphanumeric passwords.

**Claims**

1. A user authentication method comprising the steps of:

   generating (101) a perceptual password including a password object, said password object being synthesized by means of a controlled deviation, from a reference password object (602), within an object space (601) defined by appearance parameters previously acquired from a training set (500) of objects;
   assigning (102) said perceptual password to a user;
   receiving (103) a user identity claim comprising a user-provided perceptual password;
   comparing (104) said user-provided perceptual password with the perceptual password assigned to said claimed user; and
   based on the result of said comparison, accepting or rejecting (105) said user identity claim.

2. A user authentication method according to claim 1, wherein said reference password object (602) is determined through statistical analysis of at least a sub-set of said previously acquired appearance parameters.

3. A user authentication method according to claim 2, wherein said reference password object (602) is synthesized from mean values of at least a sub-set of said previously acquired appearance parameters.

4. A user authentication method according to any one of the preceding claims, wherein said step (101) of generating comprises the steps of:

   acquiring (201) a set of deviation parameters ($\mathbf{d}$); and

   deviating (202), in said object space (601), from said reference password object (602) in a direction and with an amount determined by said set of deviation parameters ($\mathbf{d}$), to thereby arrive at said password object.

5. A user authentication method according to claim 4, wherein said step (202) of deviating comprises the step of:

   adding, to a set of appearance parameters ($\mathbf{a_0}$) of said reference password object (602), a deviation set of appearance parameters ($\mathbf{Bd}$) obtained by weighting a set of prototype appearances ($\mathbf{B}$) obtained through statistical analysis of at least a sub-set of the appearance parameters of the training set with said acquired set of deviation parameters ($\mathbf{d}$).

6. A user authentication method according to any one of the preceding claims, wherein said training set (500) is selected such that said object space (601) corresponds to a well-defined object class, such as human or animal faces.

7. A user authentication method according to any one of the preceding claims, wherein said password object is a representation of an image of a human face.

8. A user authentication method according to any one of the preceding claims, wherein said step (103) of receiving comprises the steps of:

   presenting (703), to a user, an initial perceptual password seed (740) comprising an initial password object (740), and altering means (741) for altering an appearance of said initial password object (740); and
   receiving (704) a user-provided perceptual password comprising a user-altered initial password object.

9. A user authentication method according to claim 8, wherein said initial password object (740) is a default password object, such as said reference password object (602).

10. A user authentication method according to claim 8, wherein said initial password object (740) is closer in said object space to said password object (720) comprised in the perceptual password assigned to said user than the reference password object (602).

11. A user authentication method according to claim 8, wherein said initial password object (740) is randomly selected.

12. A user authentication method according to any one of claims 8 to 11, wherein said altering means (741) are adapted to enable altering of the appearance of said initial password object (740) with a minimum step size, thereby facilitating for the user to arrive sufficiently close to said password object (720) comprised in the perceptual password assigned to said user.

13. A user authentication method according to any one of claims 1 to 7, wherein said step (103) of receiving comprises the steps of:

> presenting (803) to a user a plurality of perceptual passwords candidates (820f, 840a-h), each comprising a password object;
> prompting (804) said user to indicate any of said presented perceptual password candidates which correspond to perceptual passwords previously assigned to said user; and
> receiving (805) said user-indicated perceptual password (s).

14. A method for generating a perceptual password including a password object, said method comprising the steps of:

> determining (301) a reference password object (602);
> acquiring (302) a set of deviation parameters (**d**); and
> deviating (303), in an object space (601) defined by appearance parameters of said training set (500), from said reference password object (602) in a direction and with an amount determined by said set of deviation parameters (**d**), to thereby arrive at said password object (603).

15. A perceptual password management system (902; 1002) comprising:

> processing circuitry (906; 1006) adapted to:

>> indicate a perceptual password comprising a password object, said password object being synthesized by means of a controlled deviation from a reference password object (602) within an object space (601) defined by appearance parameters previously acquired from a training set (500) of objects; and
>> assign said indicated perceptual password to a user; and

> means (907; 1007) for storing information indicative of said assignment.

16. A perceptual password management system (902; 1002) according to claim 15, wherein said perceptual password is indicated by means of a selection of model parameters indicative of said perceptual password.

17. A perceptual password management system (902; 1002) according to claim 16, wherein said model parameters include:

> a set of deviation parameters (**d**), for enabling deviation, in said object space (601), from said reference password object (602) in a direction and with an amount determined by said set of deviation parameters (**d**).

18. A perceptual password management system (902; 1002) according to claims 15 to 17, wherein said processing circuitry is further configured to:

> generate said perceptual password based on said model parameters.

19. A user authentication system (901; 1001) comprising:

> a perceptual password management system (902; 1002) according to any one of claims 15 to 18;
> display means (904a-n; 1003a-n), for displaying to a user at least one perceptual password entity comprising a password object;
> user input means (905a-n; 1003a-n), for enabling input indicative of a user identity claim comprising a user-provided perceptual password; and
> processing circuitry (906; 1004a-n; 1006) configured to:

>> compare said user-provided perceptual password with the perceptual password previously assigned to said claimed user; and
>> accept or reject said user identity claim based on the result of said comparison.

20. A computer program module adapted to execute the steps of the method according to claim 1 when run on a system according to claim 19.

21. A method, for improving security in a user authentication system based on perceptual passwords, comprising the steps of:

> displaying (1101) at least one perceptual password entity (1201a-d; 1231a-d; 1251a-d) and at least one password tag (1203; 1232a-d; 1252a-d) carrying information which is easily extractable by a human being, while being difficult to automatically extract using a computer program;

receiving (1102) a textual input; and
comparing (1103) said textual input with said information carried by said password tag, thereby enabling determination whether said input was performed by a human being.

22. A method according to claim 21, wherein said information carried by the password tag (1203; 1232a-d; 1252a-d) is related to at least one of the displayed perceptual password entities (1201a-d; 1231a-d; 1251a-d).

23. A method according to claim 22, further comprising the step of:

extracting (1104), from said textual input, said information related to said at least one perceptual password entity (1201a-d; 1231a-d; 1251a-d).

24. A method according to claim 23, wherein:

a plurality of perceptual password entities (1201a-d; 1231a-d; 1251a-d) are displayed together with said at least one password tag (1203; 1232a-d; 1252a-d); and
said information carried by said at least one password tag (1203; 1232a-d; 1252a-d) is indicative of a selection of at least one of said perceptual password entities (1201a-d; 1231a-d; 1251a-d).

25. A method according to claim 24, wherein:

said plurality of perceptual password entities (1201a-d; 1231a-d; 1251a-d) are displayed together with a plurality of password tags (1203; 1232a-d; 1252a-d) each carrying information which is easily extractable by a human being, while being difficult to automatically extract using a computer program; and
said information carried by each of said password tags (1203; 1232a-d; 1252a-d) is indicative of a selection of a corresponding one of said perceptual password entities (1201a-d; 1231a-d; 1251a-d).

26. A method according to claim 24, wherein each of said perceptual password entities (1251a-d) is selectable through textual input corresponding to the information carried by a pair of said password tags (1252a-d).

27. A method according to claims 21 to 26, further comprising the step of:

permitting, given that said textual input corresponds to said information carried by said password tag, selection and/or modification of said at least first perceptual password entity.

28. A method according to claims 21 to 27, wherein said password tag comprises a string of distorted alphanumeric characters, said information carried by said password tag being said string of alphanumeric characters.

29. A method according to claims 21 to 27, wherein said password tag comprises at least one graphical object embedded in a background having different texture properties, said information carried by said password tag being the number of said embedded graphical objects.

30. A user authentication system comprising:

display means for displaying at least one perceptual password entity (1201a-d; 1231a-d; 1251a-d) and at least one password tag (1203; 1232a-d; 1252a-d) carrying information which is easily extractable by a human being, while being difficult to automatically extract using a computer program;
input means for receiving a textual input; and
processing circuitry configured to compare said textual input with said information carried by said password tag (1203; 1232a-d; 1252a-d), thereby enabling determination of whether said input was performed by a human being.

31. A user authentication system according to claim 30, wherein said processing circuitry is further configured to:

extract (1104), from said textual input, information related to said at least one perceptual password entity (1201a-d; 1231a-d; 1251a-d).

32. A computer program module adapted to execute the steps of the method according to claim 21 when run on a system according to claim 30.

Generate PPW — 101

Assign PPW to user — 102

Receive PPW from user — 103

Compare PPW from user with previously assigned PPW — 104

Accept or reject user identity claim — 105

**Fig. 1**

Determine reference graphical object — 301

Acquire set of deviation parameters — 302

Deviate to arrive at graphical password object — 303

**Fig. 3**

Acquire deviation parameters — 201

Deviate from reference password object — 202

Assign PPW to user — 203

Receive PPW from user — 204

Compare PPW from user with previously assigned PPW — 205

Accept or reject user identity claim — 206

**Fig. 2**

**Fig. 4**

**Fig. 5a**

Acquire appearance parameters of training set — 550

Align shapes — 551

Extract textures — 552

Determine means and covariances — 553

Determine eigenvectors and eigenvalues — 554

Apply PCA to model parameters — 555

Synthesize new graphical object — 556

**Fig. 5b**

$$a_1 = a_0 + Bd$$

**Fig. 6**

701
Generate PPW

702
Assign PPW to user

703
Present PPW object

704
Receive user provided PPW

705
Compare PPW from user with previously assigned PPW

706
Accept or reject user identity claim

**Fig. 7a**

722
720
723
721

**Fig. 7b**

740
741
742

**Fig. 7c**

Generate PPW — 801

Assign PPW to user — 802

Present PPW candidates — 803

Prompt user indication — 804

Receive user-indicated PPW candidate — 805

Compare PPW from user with previously assigned PPW — 806

Accept or reject user identity claim — 807

**Fig. 8a**

821

820a  820b  820c
820d  820e  820f
820g  820h  820i

**Fig. 8b**

841

820f  840a  840b
840c  840d  840e
840f  840g  840h

**Fig. 8c**

901

906        907

μ ←→ MEM

902

904a    903a

905a

904b    903b

905b

...

904n    903n

905n

**Fig. 9**

1001

1006       1007

μ ←→ MEM

1002

1004a    1005a    1003a

μ ←→ MEM

...

1004n    1005n    1003n

μ ←→ MEM

...    ...

**Fig. 10**

Display PPW
object(s) and
graphical tag(s) — 1101

Receive textual
input — 1102

Compare tag
information with
textual input — 1103

Extract PPW
information from
textual input — 1104

**Fig. 11**

**Fig. 12a**

**Fig. 12b**

**Fig. 12c**

European Patent
Office

**EUROPEAN SEARCH REPORT**

Application Number

EP 06 11 7117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 422 589 A (AVIMIR LLC [US]) 26 May 2004 (2004-05-26) * paragraph [0005] - paragraph [0019] * * paragraph [0021] - paragraph [0035] * ----- | 1-20 | INV. G06F21/20 |
| A | EP 0 677 801 A (AT & T CORP [US]) 18 October 1995 (1995-10-18) * the whole document * ----- | 1-20 | |
| A | US 2004/230843 A1 (JANSEN WAYNE [US]) 18 November 2004 (2004-11-18) * paragraph [0016] - paragraph [0036] * ----- | 1-20 | |

TECHNICAL FIELDS
SEARCHED      (IPC)

G06F

~~The present search report has been drawn up for all claims~~

| Place of search | Date of completion of the search | Examiner |
|---|---|---|
| The Hague | 20 December 2006 | Pinto, Raúl |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

European Patent
Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-13, 14, 15-18, 19, 20

**European Patent Office**

**LACK OF UNITY OF INVENTION
SHEET B**

Application Number

EP 06 11 7117

The Search Division considers that the present European patent application does not comply with the requirements of unity of invention and relates to several inventions or groups of inventions, namely:

1. claims: 1-13,14,15-18,19,20

    Authenticating user by matching input password with previously synthesized password associated with the user
    ---

2. claims: 21-32

    Securing a user authenticating system by providing a tag difficult to extract by an automatic process
    ---

**ANNEX TO THE EUROPEAN SEARCH REPORT**
**ON EUROPEAN PATENT APPLICATION NO.**

EP 06 11 7117

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2006

| Patent document cited in search report | | Publication date | Patent family member(s) | | Publication date |
|---|---|---|---|---|---|
| EP 1422589 | A | 26-05-2004 | CN | 1547688 A | 17-11-2004 |
| | | | JP | 2004537116 T | 09-12-2004 |
| | | | WO | 03010641 A1 | 06-02-2003 |
| | | | US | 2004172564 A1 | 02-09-2004 |
| EP 0677801 | A | 18-10-1995 | JP | 7295673 A | 10-11-1995 |
| | | | US | 5559961 A | 24-09-1996 |
| US 2004230843 | A1 | 18-11-2004 | NONE | | |

EPO FORM P0459

For more details about this annex : see Official Journal of the European Patent Office, No. 12/82

## REFERENCES CITED IN THE DESCRIPTION

### Patent documents cited in the description

- US 0260955 A

### Non-patent literature cited in the description

- Déjà vu: A user study using images for authentication. *Proceedings of 9th USENIX Security Symposium,* 2000
- Securing Passwords Against Dictionary Attacks. *Proceedings of the ACM Computer and Security Conference,* 2002